# EUROPEAN PATENT APPLICATION

(11) **EP 4 590 063 A1**
(43) Date of publication of application: **23.07.2025**
(21) Application number: 23865292.9
(22) Date of filing: 31.08.2023
(51) Int. Cl.: H04W 76/14, H04W 4/46, H04W 8/00, H04W 16/26, H04W 92/18

(54) **COMMUNICATION DEVICE, COMMUNICATION SYSTEM, CONTROL METHOD AND PROGRAM**

(30) Priority: 14.09.2022 JP 2022145755
(71) Applicant: CANON KABUSHIKI KAISHA, Tokyo 146-8501 (JP)
(72) Inventor: KATSURAGI Tetsuya, Tokyo 146-8501 (JP)
(74) Representative: Canon Europe Limited
(86) International application number: PCT/JP2023/031665
(87) International publication number: WO 2024/057936

(57) **Abstract**

A communication apparatus (200) having a sidelink communication function transmits a message which does not include a Layer-2 identifier (ID) identifying a relay apparatus having a function of relaying sidelink communication, and of which a destination is a Layer-2 ID different from the Layer-2 ID of the relay apparatus, and which includes information indicating that the communication apparatus desires relay of the message before a payload.

## Description

### Technical Field

The present disclosure relates to a communication apparatus, a communication system, a control method, and a program.

### Background Art

In recent years, the formulation of the specifications of Long-Term Evolution (LTE) and fifth generation (5G) (New Radio (NR)) of the 3rd Generation Partnership Project (3GPP) (registered trademark) is promoted. Among these specifications, a standard specification termed sidelink communication (hereinafter "sidelink") is formulated. This specification directly achieves wireless communication using an interface termed PC5 between apparatuses (user equipment (UE)) not via a mobile communication network (a core network or a base station). In NR sidelink communication, a Layer-2 identifier (ID) (L2ID; an identifier for sidelink communication) is used as an identifier indicating a transmission source apparatus or a transmission destination apparatus.

On the other hand, a system where vehicles obtain information (the positions, the speeds, and vehicle control information) regarding vehicles near the vehicles by directly performing wireless communication with each other using sidelink communication and the safe driving of a driver is assisted where necessary is increasingly provided.

In a technique discussed in patent literature 1, a server acquires position information and speed information regarding a moving vehicle and stores map information in which the current position of the vehicle and a Layer-2 ID assigned to the vehicle are associated with each other. Then, vehicles communicate with each other using Layer-2 IDs based on the map information and exchange information regarding the vehicles with each other.

Further, in the 3GPP (registered trademark), the formulation of a specification in which a relay apparatus (a sidelink relay) expands the range where communication can be performed through sidelink communication is promoted.

Patent literature 2 discusses a technique in which a terminal (UE) outside the coverage of a base station is connected through sidelink communication to a relay apparatus (a sidelink relay) installed within the coverage of the base station and is enabled to communicate with the base station.

### Citation List

### Patent Literature

PTL 1: Japanese Patent Laid-Open No. 2020-188405
PTL 2: Japanese Patent Laid-Open No. 2021-078140

### Summary of Invention

### Technical Problem

The conventional techniques, however, do not discuss a method for relaying sidelink communication and thereby expanding the range where communication can be performed.

The present disclosure is directed to providing a communication apparatus that relays sidelink communication and thereby can expand the range where communication can be performed.

### Solution to Problem

A communication apparatus according to an embodiment of the present disclosure includes the following configuration. A communication apparatus having a sidelink communication function includes a transmission unit configured to transmit a message which does not include a Layer-2 identifier (ID) identifying a relay apparatus having a function of relaying sidelink communication, and of which a destination is a Layer-2 ID different from the Layer-2 ID of the relay apparatus, and which includes information indicating that the communication apparatus desires relay of the message before a payload.

### Advantageous Effects of Invention

According to the present disclosure, by relaying sidelink communication, it is possible to expand the range where communication can be performed.

### Brief Description of Drawings

[Fig. 1] Fig. 1 is a diagram illustrating an example of a configuration of a communication system according to a first exemplary embodiment of the present disclosure.
[Fig. 2] Fig. 2 is a block diagram illustrating an example of a functional configuration of a roadside apparatus according to the first exemplary embodiment.
[Fig. 3] Fig. 3 is a block diagram illustrating an example of a functional configuration of a communication apparatus composed of a vehicle according to the first exemplary embodiment.
[Fig. 4] Fig. 4 is a block diagram illustrating an example of a hardware configuration of the roadside apparatus according to the first exemplary embodiment.
[Fig. 5] Fig. 5 is a diagram illustrating an example of a data structure of a discovery message including a relay request.
[Fig. 6A] Fig. 6A is a diagram illustrating an example of a data structure of a discovery response message indicating acceptance of relay.
[Fig. 6B] Fig. 6B is a diagram illustrating an example of a data structure of a discovery response message indicating acceptance of relay.
[Fig. 7] Fig. 7 is a diagram illustrating an example of a data structure of a communication message.
[Fig. 8] Fig. 8 is a flowchart illustrating an example of processing of the roadside apparatus according to the first exemplary embodiment.
[Fig. 9] Fig. 9 is a flowchart illustrating an example of processing of the communication apparatus composed of the vehicle according to the first exemplary embodiment.
[Fig. 10] Fig. 10 is a diagram illustrating an example of a sequence of communication between the roadside apparatus and in-vehicle terminals according to the first exemplary embodiment.
[Fig. 11] Fig. 11 is a diagram illustrating a broadcast communication method.
[Fig. 12] Fig. 12 is a diagram illustrating a multicast (groupcast) communication method.
[Fig. 13] Fig. 13 is a diagram illustrating a unicast communication method.
[Fig. 14] Fig. 14 is a diagram illustrating an example of a data structure of a discovery message in a case where terminals (user equipment (UE)) directly perform sidelink communication with each other.
[Fig. 15] Fig. 15 is a flowchart illustrating an example of processing of a roadside apparatus according to a second exemplary embodiment.
[Fig. 16] Fig. 16 is a flowchart illustrating an example of processing of a communication apparatus composed of a vehicle according to the second exemplary embodiment.

### Description of Embodiments

Exemplary embodiments will be described in detail below with reference to the attached drawings. The following exemplary embodiments do not limit the invention according to the appended claims. Although a plurality of features is described in the exemplary embodiments, not all the plurality of features is essential for the invention, and the plurality of features may be optionally combined together. Further, in the attached drawings, the same or similar components are designated by the same signs, and are not redundantly described.

### <First Exemplary Embodiment>

Conventionally, in a case where terminals exchange information with each other through sidelink communication not via a relay apparatus, the terminals as user equipment (UE) cannot exchange the information until each terminal as the UE becomes able to directly connect to the partner terminal as the UE. For example, at a location where radio waves are blocked by the presence of a building or many vehicles, such as an intersection (particularly, a blind intersection), the range where communication can be performed may become narrow because the reaching distance of radio waves is short or there are many blind spots. Thus, the range where the terminals (UE) can communicate with each other is to be expanded by installing a roadside apparatus as a sidelink relay and causing the roadside apparatus to relay sidelink communication of which the destination is a particular Layer-2 identifier (ID).

However, normally, the terminals cannot know the presence or absence of the roadside apparatus at the intersection, and therefore cannot request relay by specifying the roadside apparatus. Moreover, if the roadside apparatus does not know the particular Layer-2 ID to which the sidelink communication is to be relayed, the roadside apparatus cannot determine whether a received sidelink message is to be relayed. The following exemplary embodiments solve such an issue.

Although the following exemplary embodiments exemplify a roadside apparatus set near an intersection for the purpose of exchanging information related to traffic in the vicinity of the intersection, a relay apparatus is not limited to this. The relay apparatus can be set at any installation location, and the use of communication via the relay apparatus is also any use. The relay apparatus may perform relay while the relay apparatus is moved. The relay apparatus can be installed at a location where the relay apparatus cannot connect to a mobile communication network, such as in an environment not covered by a base station. The relay apparatus, however, may be installed at a location where the relay apparatus can connect to a mobile communication network. The relay apparatus may provide a relay function in the state where the relay apparatus is connected to a mobile communication network. A plurality of relay Layer-2 IDs corresponding to a plurality of uses may be set for a single relay apparatus.

### [Configuration of System]

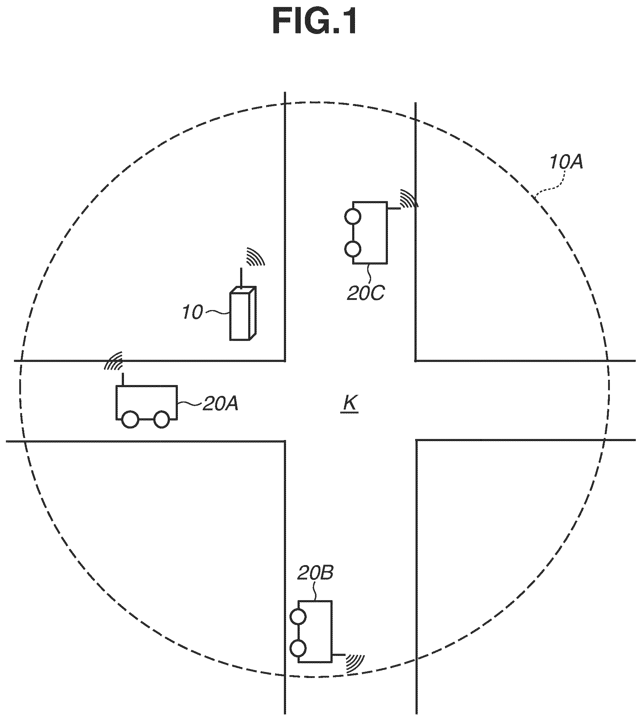

Fig. 1 is a diagram illustrating an example of the configuration of a communication system according to an exemplary embodiment of the present disclosure. The communication system includes a roadside apparatus 10 installed near an intersection K and vehicles (vehicles 20A, 20B, and 20C) running near the intersection K.

In Fig. 1, the roadside apparatus 10 (an example of a communication apparatus, a relay apparatus, or a second communication apparatus) is an apparatus that has a sidelink relay function (a function as a sidelink relay) and relays sidelink communication by the sidelink relay function. In the example of Fig. 1, for example, the roadside apparatus 10 is installed on the side of a road near the intersection K and communicates with a vehicle or a pedestrian. It is particularly desirable that the roadside apparatus 10 is installed near the blind intersection K.

In Fig. 1, the vehicles 20A, 20B, and 20C indicate vehicles running on roads near the intersection K. Each of the vehicles 20A, 20B, and 20C has the function of a sidelink communication apparatus (user equipment (UE)) and can perform sidelink communication with an external communication apparatus. Each of the vehicles 20A, 20B, and 20C can acquire information from outside the vehicle through sidelink communication, display the information, and control the automobile based on the information. Further, each of the vehicles 20A, 20B, and 20C can acquire information regarding the vehicle itself and notify an external apparatus of the information through sidelink communication.

The roadside apparatus 10 is configured to, if the roadside apparatus 10 receives a relay request message from any of sidelink communication apparatuses (UE) including the vehicles 20A, 20B, and 20C, retransmit a message having the same content as that of the relay request message or a message obtained by changing the relay request message according to the content of the message. In Fig. 1, an area 10A indicates the range where the roadside apparatus 10 can communicate.

The roadside apparatus 10 is assigned a Layer-2 ID "RRR" as an identifier for sidelink communication. The vehicles 10A, 10B, and 10C are assigned a Layer-2 ID "AAA", a Layer-2 ID "BBB", and a Layer-2 ID "CCC", respectively, as identifiers for sidelink communication. In the present exemplary embodiment, for the exchange of information through sidelink communication at an intersection, the intersection K is also assigned a Layer-2 ID "KKK" as an identifier for sidelink communication. The Layer-2 ID assigned to the intersection K is any Layer-2 ID. For example, the intersection K may be assigned the Layer-2 ID "RRR". Although in the present exemplary embodiment, a vehicle is assumed as UE compatible with sidelink communication, the UE compatible with sidelink communication is not limited to this. For example, the UE compatible with sidelink communication may be UE owned by a user, such as a tablet terminal or a smartwatch, or a terminal worn by the user, such as a head-mounted display or a wearable terminal. The UE compatible with sidelink communication may also be a car navigation apparatus installed in a vehicle.

### [Functional Configurations of Apparatuses]

Next, the functional configurations of the apparatuses according to the present exemplary embodiment are described. The configurations of functional blocks described below are merely examples. Some (all in some cases) of the described functional blocks may be replaced with other functional blocks having similar functions, or some of the functional blocks may be omitted, or a further functional block may be added. A single functional block illustrated in the following description may be divided into a plurality of functional blocks, or a plurality of functional blocks illustrated in the following description may be integrated into a single functional block.

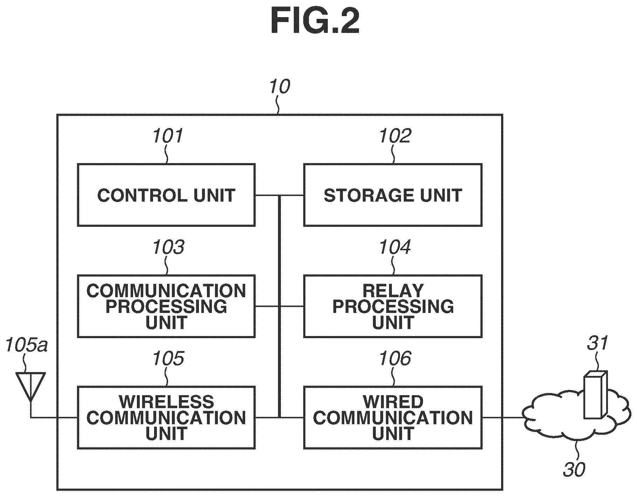

Fig. 2 is a block diagram illustrating an example of the functional configuration of the roadside apparatus according to the present exemplary embodiment. As illustrated in Fig. 2, the roadside apparatus 10 includes a control unit 101 (an example of a setting unit), a storage unit 102, a communication processing unit 103, a relay processing unit 104, a wireless communication unit 105 (an example of a communication unit or a second communication unit), and a wired communication unit 106.

According to a program stored in the storage unit 102, the control unit 101 controls the operation of the roadside apparatus 10. For example, the control unit 101 includes one or more processors such as a central processing unit (CPU) and a microprocessor unit (MPU) and controls the apparatuses by executing a computer program loaded into a random-access memory (RAM) as the storage unit 102. Control performed by the apparatuses described with reference to flowcharts and sequence diagrams described below is achieved by the cooperation of the processors such as the CPU and the MPU of the control unit 101 and the hardware of the communication unit 105.

The storage unit 102 is a RAM and a non-volatile storage area that store information used for control by the control unit 101, a program related to wireless or wired communication, and other information. A control program stored in the non-volatile storage area is loaded into the RAM and executed by the processors included in the control unit 101. As described above, the control unit 101 and the storage unit 102 function as a so-called computer.

The communication processing unit 103 analyzes a message regarding sidelink communication. For example, the communication processing unit 103 analyzes a received message regarding sidelink communication, thereby determining the content of the message. Then, the communication processing unit 103 generates destination or sender information using a Layer-2 ID or generates the content of a message regarding sidelink communication to be transmitted.

The relay processing unit 104 performs processing regarding the relay of sidelink communication transmitted from another communication apparatus. For example, the relay processing unit 104 analyzes Layer-2 IDs regarding the destination, the sender, and the relay, the content of setting information regarding the relay, and the payload of a message, thereby determining an operation regarding the relay. Functions equivalent to the communication processing unit 103 and the relay processing unit 104 may be achieved as software modules achieved by the control unit 101.

The wireless communication unit 105 transmits and receives information through sidelink communication to and from an external wireless apparatus via an antenna 105a. The wired communication unit 106 connects the roadside apparatus 10 to an external apparatus 31 such as an external server via a wired network including the Internet 30 and transmits and receives information to and from the external apparatus 31. For example, the roadside apparatus 10 can acquire information from the external apparatus 31 via the wired communication unit 106, cause the communication processing unit 103 to generate a sidelink message in response to the acquired information, and transmit the sidelink message via the wireless communication unit 105.

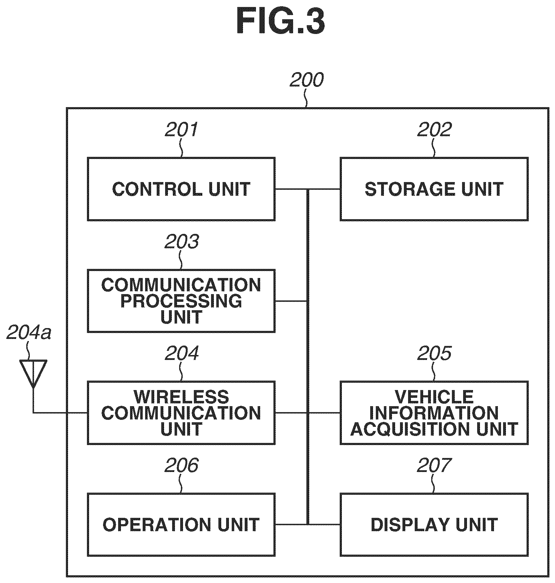

Fig. 3 is a block diagram illustrating an example of the functional configuration of a communication apparatus composed of each of the vehicles (the vehicles 20A, 20B, and 20C) according to the present exemplary embodiment.

As illustrated in Fig. 3, a communication apparatus 200 (a communication apparatus or a first communication apparatus) includes a control unit 201, a storage unit 202, a communication processing unit 203, a wireless communication unit 204 (an example of a transmission unit or a first communication unit), a vehicle information acquisition unit 205, an operation unit 206, and a display unit 207.

According to a program stored in the storage unit 202, the control unit 201 controls the operation of the communication apparatus 200. The control unit 201 may be configured as a part of a control apparatus regarding the operation of this vehicle other than the operation of the communication apparatus 200, and may be configured to cooperate with the control apparatus to execute various types of processing.

The storage unit 202 saves information used for control by the control unit 201 and information related to wireless or wired communication.

The communication processing unit 203 analyzes a message regarding sidelink communication. For example, the communication processing unit 203 analyzes the content of a message regarding sidelink communication received by the wireless communication unit 204. If the content of the message indicates communication directed to this apparatus, the communication processing unit 203 performs processing according to the content of the message and sends a reply where necessary.

The wireless communication unit 204 transmits and receives information through sidelink communication to and from an external wireless apparatus via an antenna 204a. The wireless communication unit 204 may also be compatible with a communication method other than sidelink communication.

The vehicle information acquisition unit 205 acquires vehicle information regarding this vehicle. The vehicle information includes position information regarding this vehicle, information of which another vehicle is to be notified, and other information.

The operation unit 206 receives an operation related to the communication apparatus 200 of this vehicle.

The display unit 207 displays information acquired from outside through wireless communication by this vehicle, information regarding an operation on the operation unit 206, and the vehicle information acquired via the vehicle information acquisition unit 205. The display unit 207 may be configured as a part of a display apparatus that displays information regarding this vehicle other than information related to the communication apparatus 200.

### [Hardware Configuration]

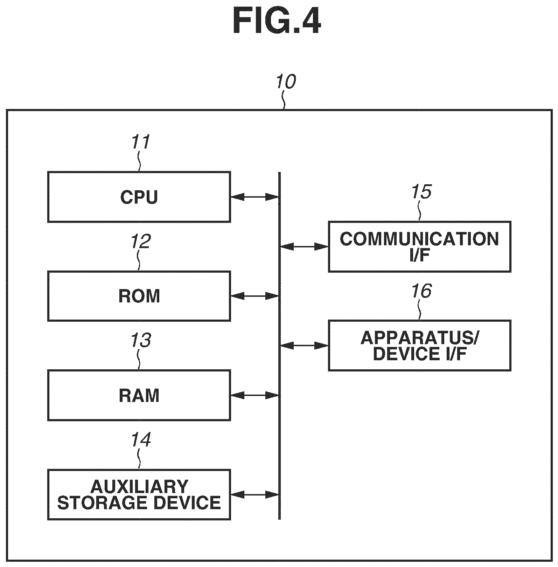

Fig. 4 is a block diagram illustrating an example of the hardware configuration of the roadside apparatus.

As illustrated in Fig. 4, the roadside apparatus 10 includes a central processing unit (CPU) 11, a read-only memory (ROM) 12, a random-access memory (RAM) 13, and an auxiliary storage device 14. The roadside apparatus 10 also includes a communication interface (I/F) 15 and an apparatus interface (I/F) 16.

The CPU 11 controls the entirety of the roadside apparatus 10 using a computer program and data stored in the ROM 12 or the RAM 13, thereby achieving the functions of the roadside apparatus 10 illustrated in Fig. 2. In the roadside apparatus 10, one or more pieces of dedicated hardware different from the CPU 11 may be provided, and the dedicated hardware may execute at least a part of the processing of the CPU 11. Examples of the dedicated hardware include an application-specific integrated circuit (ASIC), a field-programmable gate array (FPGA), and a digital signal processor (DSP).

The ROM 12 stores a program that does not need to be changed. The RAM 13 temporarily stores a program and data supplied from the auxiliary storage device 14 and data supplied from outside via the communication I/F 15. For example, the auxiliary storage device 14 includes a hard disk drive and stores various pieces of data.

The communication I/F 15 is used for communication with an external apparatus. For example, the wireless communication unit 105 (Fig. 2) performs wireless communication with an external apparatus using the communication I/F 15. In this case, for example, the roadside apparatus 10 can also determine the situation based on information from the external apparatus 31 connected to the Internet 30 and notify a vehicle or a pedestrian of necessary information through sidelink communication based on the determination.

To the apparatus I/F 16, various apparatuses can be connected. For example, to the apparatus I/F 16, a display apparatus and an input apparatus for a server administrator to confirm information managed by the roadside apparatus 10 and a sensor and a camera mounted on a housing of the roadside apparatus 10 are connected. In this case, for example, the roadside apparatus 10 can also determine the situation of a vehicle or a pedestrian passing through a road based on information from the camera or the sensor and notify the vehicle or the pedestrian of necessary information through sidelink communication based on the determination.

The communication apparatus 200 composed of each of the vehicles 20A, 20B, and 20C can also be achieved by a similar hardware configuration. For example, in a case where the communication apparatus composed of each of the vehicles 20A, 20B, and 20C has a hardware configuration as illustrated in Fig. 4, to the apparatus I/F 16, an imaging unit including a mechanism for executing imaging and a sensor of the vehicle can be connected. In this case, for example, each of the vehicles 20A, 20B, and 20C can also determine the situation of another vehicle or a pedestrian passing through a road based on information from the imaging unit or the sensor and notify another vehicle or the pedestrian of necessary information through sidelink communication based on the determination. In the present exemplary embodiment, each of the vehicles 20A, 20B, and 20C transmits the necessary information to the roadside apparatus 10 and thereby can notify another vehicle or the pedestrian of the necessary information through sidelink communication via relay by the roadside apparatus 10.

More specifically, for example, the contents that the roadside apparatus 10 and the communication apparatus 200 communicate to and from another apparatus through sidelink communication are the surrounding traffic situation detected based on information regarding the sensor or the camera, reminder information based on future prediction, sensor data, and a camera video. By the transmission and reception of such information, each vehicle can not only grasp the presence or absence of an oncoming vehicle at a junction such as the intersection K, but also grasp information regarding the oncoming vehicle based on position information and speed information regarding the oncoming vehicle. Thus, the vehicle can assist the driving of a driver. Since information can be exchanged with low latency, the vehicle can also handle control of the order of merging and control of the brake in the event of an emergency. Further, the vehicle receives, through sidelink communication, road traffic information such as an accident, a traffic jam, an emergency vehicle, a construction work vehicle, or an abnormally-running vehicle or information regarding the motion of a pedestrian or a bicycle detected by the roadside apparatus 10 or another vehicle and knows the information in advance, and thereby can run more safely.

A pedestrian or a bicycle having a terminal (UE) having a similar function can know a dangerous motion of a vehicle near the pedestrian or the bicycle in advance, and therefore can effectively reduce the possibility that the pedestrian or the bicycle becomes involved in an accident.

### [Examples of Processing]

In the present exemplary embodiment, each of the vehicles (the vehicles 20A, 20B, and 20C) transmits a discovery message including a relay request (a relay request message) to the roadside apparatus 10. In response to the received discovery message including the relay request, the roadside apparatus 10 returns a discovery response message indicating acceptance of the relay. The vehicle receives the discovery response message, thereby recognizing that the vehicle is a target of the relay by the roadside apparatus 10. Vehicles that are targets of the relay can execute communication in which the roadside apparatus 10 is a relay apparatus with each other.

Even a vehicle that is not a target of the relay can perform direct sidelink communication, i.e., sidelink communication not via the roadside apparatus 10, with another vehicle. According to the present exemplary embodiment, this vehicle becomes a target of the relay and thereby can perform sidelink communication via the roadside apparatus 10 with a vehicle or a pedestrian that cannot perform direct sidelink communication for a reason such as the blocking of radio waves.

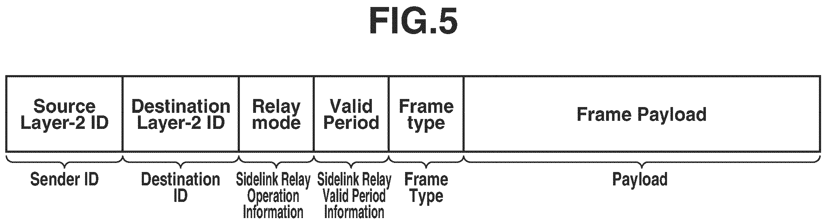

Fig. 5 is a diagram illustrating an example of the data structure of the discovery message including the relay request. 5G ProSe direct discovery can be used to transmit the discovery message including the relay request. A Soliciation message for 5G ProSe UE-to-network relay discovery can be used for the transmission. ProSe is the abbreviation of proximity-based services.

In Fig. 5, in "Source Layer-2 ID", a Layer-2 ID indicating the transmission source of the information is stored. For example, if the transmission source is the vehicle 20A, the Layer-2 ID "AAA" is stored. If the transmission source is the vehicle 20B, the Layer-2 ID "BBB" is stored. If the transmission source is the vehicle 20C, the Layer-2 ID "CCC" is stored.

In "Destination Layer-2 ID", a Layer-2 ID indicating the destination of the information, i.e., the Layer-2 ID "KKK" assigned to the intersection K, is stored.

Next, "Relay mode" and "Valid Period" that are data fields newly added to the Soliciation message to specify a relay request are described. In "Relay mode", information regarding a relay request to relay sidelink communication is stored. For example, a code indicating a relay request to relay sidelink communication is stored in "Relay mode", whereby the roadside apparatus 10 can recognize that a relay request is made by the transmission source. For example, 1 means that the transmission source desires a relay request. 0 means that the transmission source does not desire a relay request.

In "Valid Period", information regarding the continuation period of a relay operation for relaying sidelink communication, such as the valid period or the valid number of times, is stored.

In "Frame type", information indicating the type of this message is stored.

In "Frame Payload", the body of information to be exchanged between devices using this message is stored.

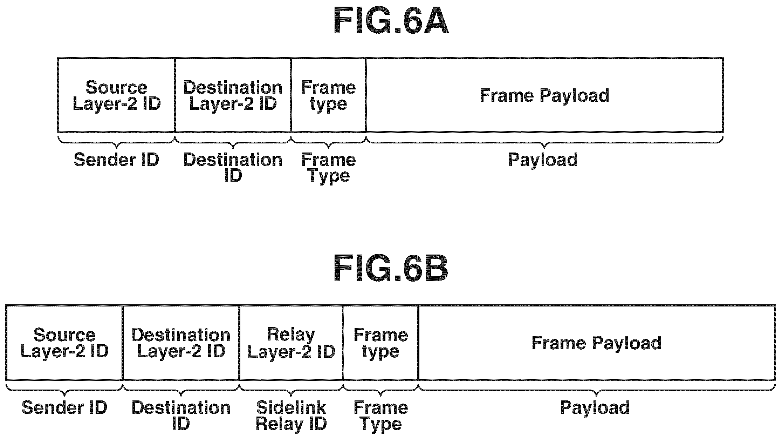

Figs. 6A and 6B are diagrams illustrating examples of the data structure of the discovery response message indicating acceptance of the relay.

In the example of Fig. 6A, in "Source Layer-2 ID", the Layer-2 ID "KKK" of the intersection K is stored. In "Frame Payload", information indicating whether the relay can be performed is stored.

The example of Fig. 6B illustrates the data structure of the response message in a case where the roadside apparatus 10 stores the Layer-2 ID "KKK" of the intersection K in both "Source Layer-2 ID" and "Relay Layer-2 ID".

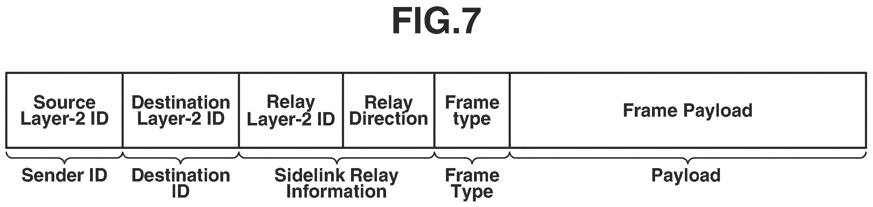

Fig. 7 is a diagram illustrating an example of the data structure of a communication message. This data structure is the data structure of a communication message when the vehicles (the vehicles 20A, 20B, and 20C) perform sidelink communication with each other via the roadside apparatus 10 after the roadside apparatus 10 starts the relay operation.

In Fig. 7, in "Source Layer-2 ID", a Layer-2 ID indicating the transmission source of the information is stored. In "Destination Layer-2 ID", a Layer-2 ID indicating the destination of the information is stored.

In "Relay Layer-2 ID", a Layer-2 ID indicating a device having the sidelink relay function for relaying the message is stored. That is, in a case where communication is performed via the roadside apparatus 10, the message is transmitted by storing the Layer-2 ID "KKK" of the intersection K in "Relay Layer-2 ID".

In "Relay Direction", information indicating in which of the directions of a terminal (UE) and a sidelink relay, i.e., the roadside apparatus 10, the message is directed, is stored.

In "Relay Direction", information indicating which of the directions of a terminal (UE) and the roadside apparatus 10 (a sidelink relay) the message is directed is stored.

In "Frame Payload", the body of information to be exchanged between the terminals (UE), i.e., the vehicles (the vehicle 20A, the vehicle 20B, and the vehicle 20C), using this message is stored.

Next, the processing of the roadside apparatus 10 and each of the vehicles (the vehicles 20A, 20B, and 20C) is described.

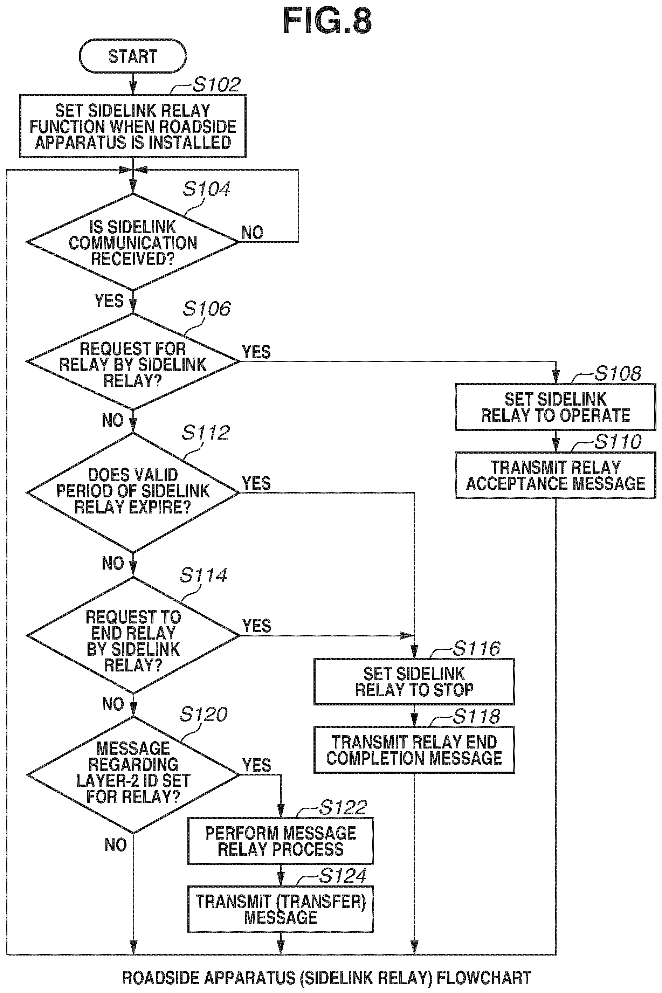

Fig. 8 is a flowchart illustrating an example of the processing of the roadside apparatus.

In step S102 in Fig. 8, the control unit 101 (Fig. 2) of the roadside apparatus 10 executes a process for setting a parameter regarding the sidelink relay function in the roadside apparatus 10 when the roadside apparatus 10 is installed. For example, by this process, the Layer-2 ID "KKK" assigned to the intersection K is stored in the storage unit 102. This enables the roadside apparatus 10 to relay communication of which the destination is the Layer-2 ID "KKK". In the present exemplary embodiment, the Layer-2 ID "KKK" corresponds to a relay Layer-2 ID.

In step S104, the control unit 101 determines whether a message regarding sidelink communication is received via the wireless communication unit 105. The control unit 101 waits until the determination is positive. Then, the processing proceeds to step S106.

In step S106, the control unit 101 determines, via the communication processing unit 103, whether the message of which the reception is confirmed in step S104 is a discovery message including a relay request for relay by the sidelink relay function (a relay request message) (Fig. 5). If the determination of the control unit 101 is positive, the processing proceeds to step S108. If the determination is negative, the processing proceeds to step S112.

In step S108, the control unit 101 sets the sidelink relay function. In this step, the control unit 101 sets, via the relay processing unit 104, a Layer-2 ID indicating the transmission source of the discovery message including the relay request confirmed in step S106 as a relay target of the sidelink communication. Based on the exchange of detailed information, the communication apparatus 200 of the vehicle also sets a parameter regarding the sidelink relay function. This enables the roadside apparatus 10 to relay communication from the transmission source of the discovery message including the relay request. The control unit 101 also saves valid period information specified by the discovery message. The setting content of the sidelink relay function and the valid period information are stored in the storage unit 102.

In step S110, the control unit 101 returns a discovery response message indicating acceptance of the relay (Fig. 6A or 6B) to the transmission source of the discovery message via the wireless communication unit 105. Then, the processing proceeds to step S104. The return destination of the discovery response message is the transmission source indicated by the discovery message (Fig. 5). The discovery response message includes the Layer-2 ID "RRR" of the roadside apparatus 10, whereby the transmission source of the discovery message can know the Layer-2 ID "RRR".

In a case where the relay cannot be accepted for some reason, the process of step S108 may be omitted, and a message indicating that the relay cannot be accepted may be returned to the transmission source of the discovery message.

As described above, a connection between the transmission source of the discovery message including the relay request and the roadside apparatus 10 is established through communication using a unicast communication method. The unicast communication method will be further described below.

On the other hand, in step S112, the control unit 101 determines, via the communication processing unit 103, whether the valid period of relay in the message of which the reception is confirmed in step S104 expires. In this determination, the valid period information stored in the storage unit 102 in step S108 is used. If the determination of the control unit 101 is positive, the processing proceeds to step S116. If the determination is negative, the processing proceeds to step S114.

In step S116, the control unit 101 stops a relay process regarding the transmission source of the message of which the reception is confirmed in step S104. The setting of the parameter regarding the sidelink relay function (step S108) is cancelled.

In step S118, the control unit 101 transmits a relay end completion message indicating that the relay process for relaying the message is stopped to the vehicle (the vehicle 20A, 20B, or 20C) that has made the relay request. Then, the processing proceeds to step S104. The transmission destination of the relay end completion message is the transmission source included in the message of which the reception is confirmed in step S104.

On the other hand, in step S114, the control unit 101 determines, via the communication processing unit 103, whether the message of which the reception is confirmed in step S104 is a message that makes a request to end relay (a relay end request message). If the determination of the control unit 101 is positive, the processing proceeds to step S116. If the determination is negative, the processing proceeds to step S120. The relay end request message can include information regarding the period until the end of the relay operation. In this case, the process of step S116 is executed at a timing specified by the relay end request message.

In step S120, the control unit 101 determines whether the transmission source indicated by the message of which the reception is confirmed in step S104 is the setting target of the sidelink relay function in step S108. If the determination of the control unit 101 is positive, the processing proceeds to step S122. If the determination is negative, the processing proceeds to step S104.

In step S122, the control unit 101 rewrites necessary information such as Direction in the message of which the reception is confirmed in step S104 via the relay processing unit 104, thereby creating a message as a target of transmission (relay).

If the message of which the reception is confirmed in step S104 corresponds to a message already transmitted in step S124, the processes of steps S122 and S124 can be omitted. That is, if the same message in which relay is requested is received multiple times, the processes of steps S122 and S124 can be omitted. This can prevent the same message from being relayed multiple times.

In step S124, the control unit 101 causes the wireless communication unit 104 to transmit (transfer) the message generated in step S122 as a sidelink communication message. Then, the processing proceeds to step S104. The transmission destination (the transfer destination) in step S124 may be limited to the terminal (UE) as the setting target of the sidelink relay function in step S108, or may not be limited to this. Consequently, a message such as an information exchange message of which the reception is confirmed in step S104 is relayed via the roadside apparatus 10. The information exchange message is a message for exchanging information between vehicles and includes vehicle information such as the speeds of the vehicles, the accelerations of the vehicles, and the opening degrees of the accelerators.

If the determination in step S120 is negative, a message indicating that the message is not relayed may be returned to the transmission source indicated by the message of which the reception is confirmed in step S104.

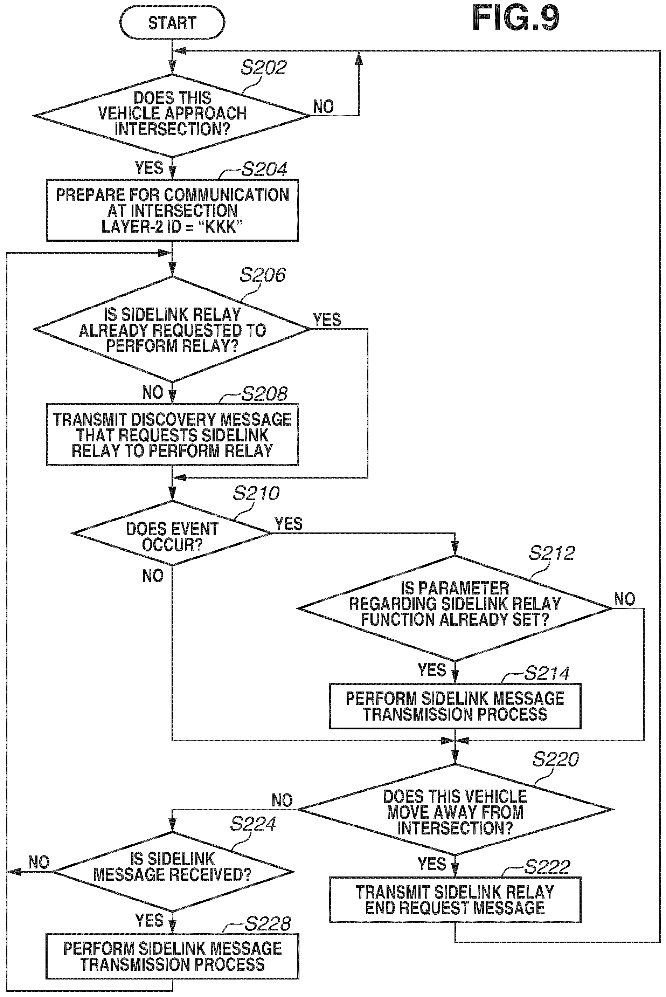

Fig. 9 is a flowchart illustrating an example of the processing of the communication apparatus composed of each of the vehicles (the vehicles 20A, 20B, and 20C). The example of Fig. 9 illustrates a case where this vehicle (the vehicle 20A, 20B, or 20C) passes through the intersection K (Fig. 1).

In step S202 in Fig. 9, based on information acquired by the vehicle information acquisition unit 205, the control unit 201 (Fig. 3) of the communication apparatus 200 determines whether this vehicle (the vehicle 20A, 20B, or 20C) approaches the intersection K. The control unit 201 waits until the determination is positive. Then, the processing proceeds to step S204.

In step S202, for example, the control unit 201 compares position information obtained by a Global Positioning System (GPS) apparatus mounted on this vehicle and intersection information stored in the storage unit 102. Based on the result of comparing these pieces of information, the control unit 201 can recognize that this vehicle approaches the intersection K. In this case, in the intersection information, the coordinates of intersections including the intersection K and Layer-2 IDs assigned to the intersections (e.g., the Layer-2 ID "KKK" assigned to the intersection K) are stored in association with each other. The control unit 201 compares the position information (coordinates) acquired in real time by the vehicle information acquisition unit 205 and the coordinates of the intersections indicated by the intersection information and thereby can recognize that this vehicle approaches a particular intersection.

In step S204, the control unit 201 performs a communication preparation process so that sidelink communication can operate between this vehicle and the Layer-2 ID "KKK" assigned to the intersection K. For example, in step S204, the Layer-2 ID "KKK" is registered as a communication partner in the storage unit 202.

In step S206, the control unit 201 determines whether the roadside apparatus 10 is already requested to perform relay with the Layer-2 ID "KKK" assigned to the intersection K (step S208). If the determination of the control unit 201 is positive, the processing proceeds to step S210. If the determination is negative, the processing proceeds to step S208.

In step S208, the control unit 201 transmits, via the communication processing unit 203, a discovery message as a relay request message (Fig. 5) that requests the roadside apparatus 10 to perform relay.

In step S210, based on information acquired by the vehicle information acquisition unit 205, the control unit 201 determines whether an event of which a notification is to be given via relay by the roadside apparatus 10 occurs. If the determination of the control unit 201 is positive, the processing proceeds to step S212. If the determination is negative, the processing proceeds to step S220.

In step S212, the control unit 201 determines whether a discovery response message indicating acceptance of the relay (Fig. 6A or 6B) from the roadside apparatus 10 is already received, and further, a parameter regarding the sidelink relay function is already set in the communication apparatus 200. This discovery response message indicating acceptance of the relay is a message transmitted from the roadside apparatus 10 in step S110 (Fig. 8). If the determination of the control unit 201 is positive in step S212, the processing proceeds to step S214. If the determination is negative, the processing proceeds to step S220. In a predetermined case, the control unit 201 may repeat the transmission of the discovery message of the relay request until a discovery response message is received. For example, if a discovery response message is not received even after a predetermined time elapses since the control unit 201 transmits the discovery message that requests relay (Fig. 5) (step S208), the control unit 201 may repeat the transmission of the discovery message of the relay request.

In step S214, the control unit 201 transmits a communication message (Fig. 7) related to the event that has occurred to a terminal as a relay target via the roadside apparatus 10 (the sidelink relay). In "Frame Payload" (Fig. 7) of this communication message, the occurrence of a particular event and information related to the event that has occurred are described.

In step S220, based on information acquired by the vehicle information acquisition unit 205, the control unit 201 determines whether this vehicle moves away from the intersection K. If the determination of the control unit 201 is positive, the processing proceeds to step S222. If the determination is negative, the processing proceeds to step S224. In step S220, for example, based on the position information obtained by the GPS apparatus mounted on this vehicle and the intersection information stored in the storage unit 102, the control unit 201 can recognize that this vehicle moves away from the intersection K.

In step S222, the control unit 201 transmits, via the communication processing unit 203, a message that requests the roadside apparatus 10 to end the relay (a relay end request message) to the roadside apparatus 10. The relay end request message is a message of which the reception is confirmed by the roadside apparatus 10 in step S114 (Fig. 8). As the format of the relay end request message, for example, the same format (data structure) as the discovery message including the relay request (Fig. 5) can be used. In this case, it is possible to indicate the relay end request message by setting the values of "Relay mode" and "Valid Period" illustrated in Fig. 5 to predetermined values.

On the other hand, in step S224, the control unit 201 determines, via the wireless communication unit 204, whether a sidelink communication message transmitted from another terminal (UE) is received. If the determination of the control unit 201 is positive, the processing proceeds to step S228. If the determination is negative, the processing proceeds to step S206. The sidelink communication message as the determination target in step S224 is not limited to a message via the roadside apparatus 10, and may be a sidelink communication message directly transmitted from another terminal (UE) to this vehicle.

In step S228, according to the sidelink communication message of which the reception is confirmed in step S224, the control unit 201 transmits a necessary sidelink communication message to the roadside apparatus 10.

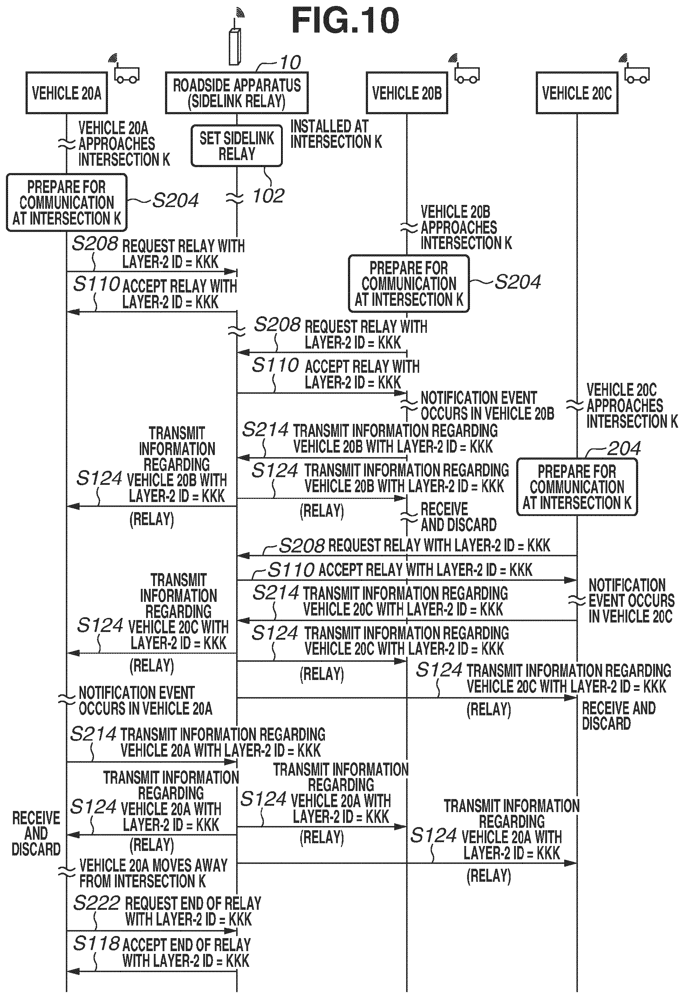

Fig. 10 is a diagram illustrating an example of the sequence of communication between the roadside apparatus and the in-vehicle terminals. Step numbers in Fig. 10 correspond to the processes illustrated in Figs. 8 and 9.

As illustrated in Fig. 10, if the roadside apparatus 10 is installed at the intersection K, the sidelink relay function for relaying a sidelink message transmitted to the Layer-2 ID "KKK" of the intersection KK is set in the roadside apparatus 10. After the sidelink relay function is set, the roadside apparatus 10 starts (step S102).

If the vehicle 20A approaches the intersection, the communication apparatus 200 of the vehicle 20A is set so that the communication apparatus 200 of the vehicle 20A can transmit and receive a sidelink message addressed to the Layer-2 ID "KKK" of the intersection (step S204).

Next, the communication apparatus 200 of the vehicle 20A transmits to the roadside apparatus 10 a discovery message including a relay request of which the destination is the Layer-2 ID "KKK" of the intersection K (step S208).

The roadside apparatus 10 having received the discovery message makes a setting regarding the use of the sidelink relay function by exchanging information with the vehicle 20A. Then, the roadside apparatus 10 transmits a message indicating acceptance of the relay in reply to the discovery message (step S110).

Similarly, if the vehicle 20B approaches the intersection K, the vehicle 20B prepares for communication with the Layer-2 ID of the intersection K (step S204) and transmits a discovery message including a relay request of which the destination is the Layer-2 ID of the intersection K (step SS208). If the roadside apparatus 101 receives the discovery message, the roadside apparatus 10 makes a setting regarding the use of the sidelink relay function and transmits a message indicating acceptance of the relay (steps S108 to S110).

By the above operations, the vehicles 20A and 20B can perform communication with the Layer-2 ID "KKK" assigned to the intersection K with each other via the roadside apparatus 10.

If an event (a notification event) occurs in the vehicle 20B in this state, the vehicle 20B transmits information (step S214). As a result, the information is relayed to the vehicle 10A by the sidelink relay function of the roadside apparatus 10 (step S124). In a case where the applied communication method is multicast, the information also reaches the vehicle 20B. However, based on the transmission source of the information, the vehicle 220B determines this information as the information transmitted from the vehicle 20B itself and discards or ignores the information. The applied communication method will be described below.

Further, if the vehicle 20C approaches the intersection K, the processes of steps S204, S208, and step S110 are executed by the roadside apparatus 10 and the communication apparatus 200 of the vehicle 20C. Consequently, the vehicles 20A, 20B, and 20C can perform communication with the Layer-2 ID "KKK" assigned to the intersection K with each other via the roadside apparatus 10.

If an event (a notification event) occurs in the vehicle 20C in this state, the vehicle 20C transmits information (step S214). As a result, the information is relayed to the vehicles 20A and 20B by the sidelink relay function of the roadside apparatus 10 (step S124). In a case where the applied communication method is multicast, the information also reaches the vehicle 20B (step S124). The vehicle 20B, however, determines this information as the information transmitted from the vehicle 20B itself and discards or ignores the information.

Similarly, if an event (a notification event) occurs in the vehicle 20A in this state, information transmitted from the vehicle 20A is relayed to the vehicles 20B and 20C by the sidelink relay function of the roadside apparatus 10 (step S124). In a case where the applied communication method is multicast, the information also reaches the vehicle 20A (step S124). The vehicle 20A, however, determines this information as the information transmitted from the vehicle 20A itself and discards or ignores the information.

In a case where the relay by the roadside apparatus 10 becomes unnecessary, such as a case where the vehicle 20A moves away from the intersection K, the vehicle 20A transmits a relay end request message to the roadside apparatus 10 (step S222). If the roadside apparatus 10 having received the relay end request message accepts the end of the relay, the roadside apparatus 10 transmits a relay end completion message to the vehicle 20A (step S118). The stop and the end of the relay operation by the sidelink relay function of the roadside apparatus 10 are executed by the roadside apparatus 10 determining the situation.

In the present exemplary embodiment, the Layer-2 ID "RRR", which is the identifier assigned to the roadside apparatus 10, can also be appropriately used. By using the Layer-2 ID "RRR" as a destination, it is possible to recognize that the type and the function of a communication message are different from those in a case where an identifier for relay is used. For example, the roadside apparatus 10 and a terminal (EU) having received a communication message can recognize that the received communication message is not a communication message regarding the exchange of information at the intersection KKK or is a communication message that does not request the roadside apparatus 10 to perform relay.

Next, sidelink communication methods are described.

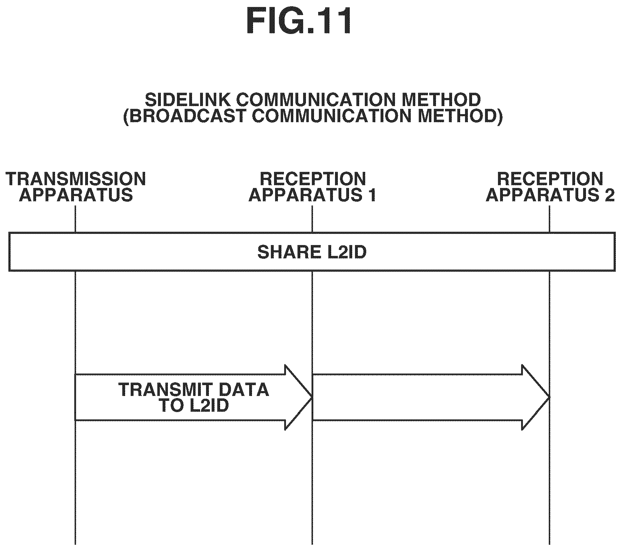

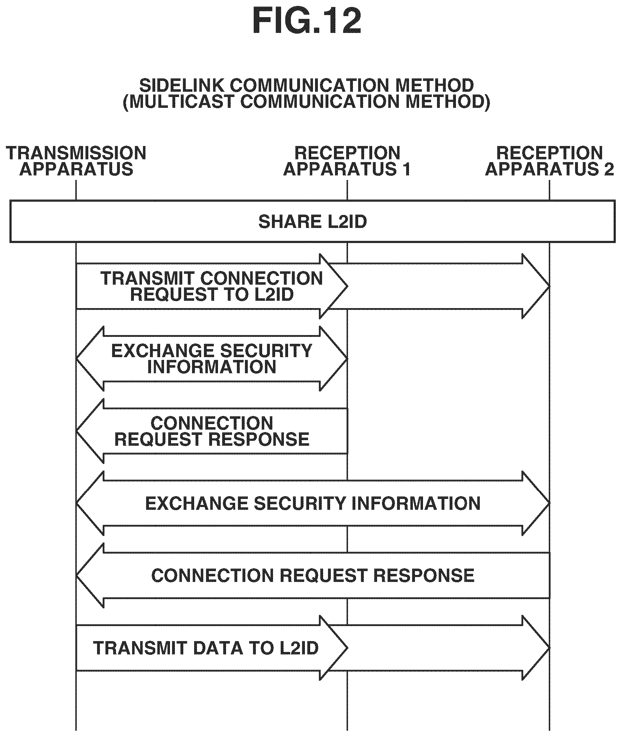

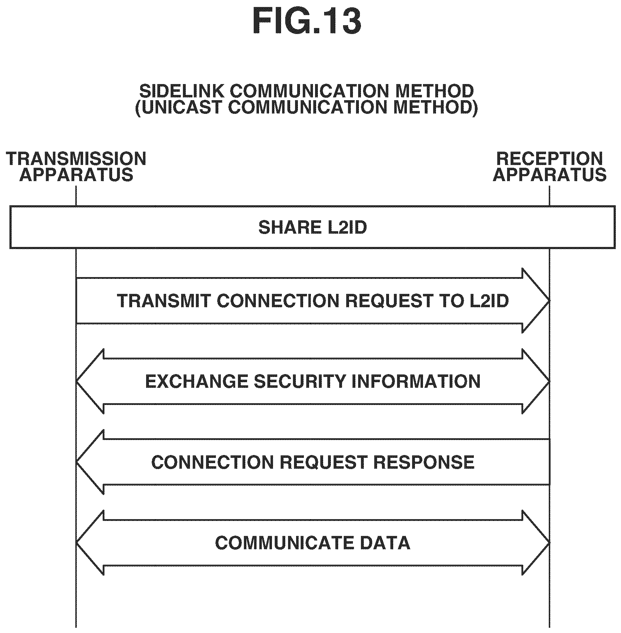

Fig. 11 is a diagram illustrating a broadcast communication method. Fig. 12 is a diagram illustrating a multicast (groupcast) communication method. Fig. 13 is a diagram illustrating a unicast communication method.

In the case of the "broadcast communication method" illustrated in Fig. 11, a Layer-2 ID that is already shared is set as the transmission destination and the reception destination in apparatuses on the transmission side and the reception side, respectively. On the other hand, in the case of the "multicast (groupcast) communication method" and the "unicast communication method" as illustrated in Figs. 12 and 13, an apparatus on the transmission side transmits a relay request (a "connection request" in Figs. 12 and 13) to a Layer-2 ID that is already shared. In response to this, a reception apparatus having the Layer-2 ID that is already shared responds to the relay request (a "connection request response" in Figs. 12 and 13) after the exchange of security information, whereby the apparatuses can communicate data with each other.

Although the present exemplary embodiment is applicable to any of the communication methods, an example is described where the "multicast communication method" is used in the process of step S122 in Fig. 8.

Incidentally, as described above, the terminals (UE) such as the vehicles 20A, 20B, and 20C can directly perform sidelink communication with each other without using relay by the roadside apparatus 10. That is, direct sidelink communication coexists with communication using relay by the roadside apparatus 10. Direct sidelink communication and communication using relay by the roadside apparatus 10 coexist. Thus, the same terminal (UE) can receive a message having substantially the same content multiple times. However, processing in this case is left to the terminal (UE) having received the message. For example, a message having substantially the same content received from the second time onward may be discarded or ignored.

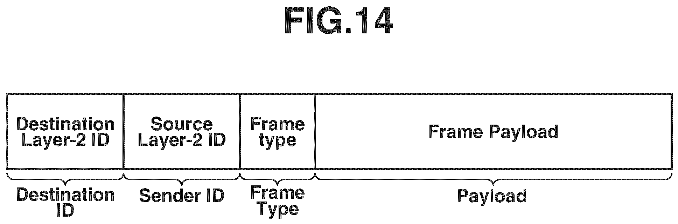

Fig. 14 is a diagram illustrating an example of the data structure of a discovery message in a case where the terminals (UE) directly perform sidelink communication with each other.

As illustrated in Fig. 14, in a case where each of the terminals (UE) such as the vehicles 20A, 20B, and 220C searches for a terminal (UE) that does not have a relay function, a discovery message to be transmitted does not include information indicating a relay request.

### <Second Exemplary Embodiment>

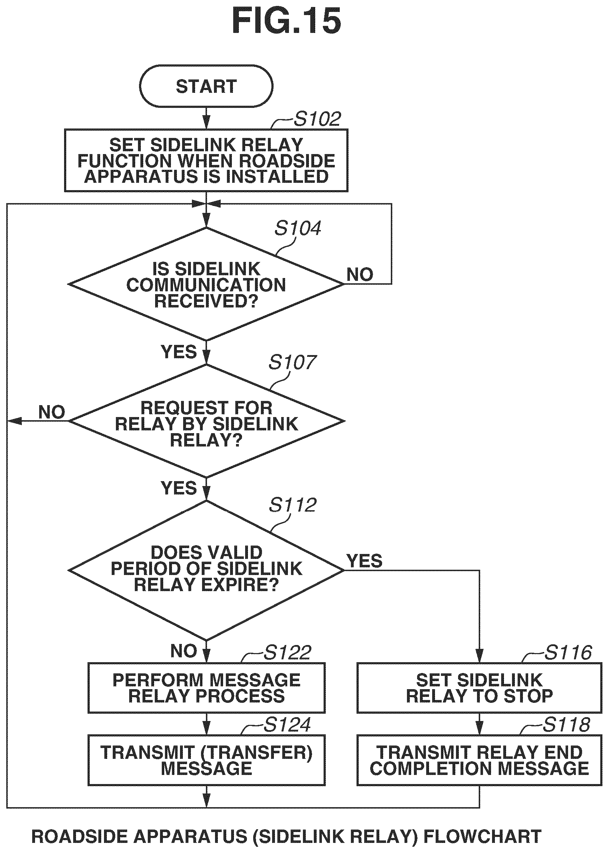

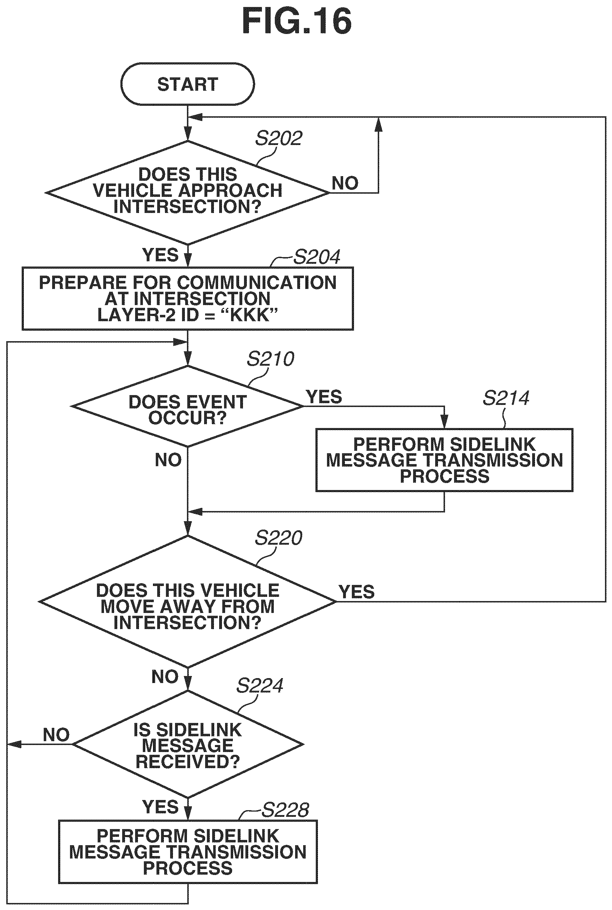

Next, with reference to Figs. 15 and 16, an example is illustrated where the broadcast communication method is applied to the transmission of messages from the vehicles and the roadside apparatus 10. Portions different from the first exemplary embodiment are described below.

Fig. 15 is a flowchart illustrating an example of the processing of the roadside apparatus. In Fig. 15, processes corresponding to the processes in Fig. 8 are designated by the same step numbers as those in Fig. 8.

In step S102 in Fig. 15, the control unit 101 (Fig. 2) of the roadside apparatus 10 executes a process for setting a parameter regarding the sidelink relay function in the roadside apparatus 10 when the roadside apparatus 10 is installed. For example, by this process, the Layer-2 ID "KKK" assigned to the intersection K is stored in the storage unit 102. This enables the roadside apparatus 10 to relay communication of which the destination is the Layer-2 ID "KKK".

In step S104, the control unit 101 determines whether a message regarding predetermined sidelink communication is received via the wireless communication unit 105. The control unit 101 waits until the determination is positive. Then, the processing proceeds to step S1077.

In step S107, the control unit 101 determines, via the communication processing unit 103, whether the message of which the reception is confirmed in step S104 (Fig. 7) is a relay request message for relay by the sidelink relay function. If the determination of the control unit 101 is positive, the processing proceeds to step S112. If the determination is negative, the processing proceeds to step S104. In step S107, the control unit 101 determines whether the destination of the message of which the reception is confirmed in step S104 ("Destination Layer-2 ID" in Fig. 7) is the Layer-2 ID "KKK". That is, if the destination of the message is the Layer-2 ID "KKK", the control unit 101 determines that the message is a relay request message.

On the other hand, in step S112, the control unit 101 determines, via the communication processing unit 103, whether the valid period of the relay in the message of which the reception is confirmed in step S104 expires. In this determination, the valid period information stored in the storage unit 102 in step S108 is used. If the determination of the control unit 101 is positive, the processing proceeds to step S116. If the determination is negative, the processing proceeds to step S122.

In step S116, the control unit 101 stops a relay process regarding the transmission source of the message of which the reception is confirmed in step S104.

In step S118, the control unit 101 transmits a relay end message indicating that the relay process for relaying the message is stopped to the vehicle (the vehicle 20A, 20B, or 20C) that has made the relay request. Then, the processing proceeds to step S104.

In step S122, the control unit 101 rewrites necessary information such as Direction in the message of which the reception is confirmed in step S104 via the relay processing unit 104, thereby creating a message as a target of transmission (relay).

In step S124, the control unit 101 transmits (relays) the message generated in step S122 as a sidelink communication message to the transmission destination indicated by the message of which the reception is confirmed in step S104 via the wireless communication unit 105. Then, the processing proceeds to step S104. Consequently, the message of which the reception is confirmed in step S104 is relayed to the transmission destination indicated by the message via the roadside apparatus 10.

Fig. 16 is a flowchart illustrating an example of the processing of the communication apparatus composed of each of the vehicles (the vehicles 20A, 20B, and 20C). The example of Fig. 16 illustrates a case where this vehicle (the vehicle 20A, 20B, or 20C) passes through the intersection K (Fig. 1). In Fig. 16, processes corresponding to the processes in Fig. 8 are designated by the same step numbers as those in Fig. 9.

In step S202 in Fig. 16, based on information acquired by the vehicle information acquisition unit 205, the control unit 201 (Fig. 3) of the communication apparatus 200 determines whether this vehicle (the vehicle 20A, 20B, or 20C) approaches the intersection K. The control unit 201 waits until the determination is positive. Then, the processing proceeds to step S204.

In step S204, the control unit 201 performs a communication preparation process so that sidelink communication can operate between this vehicle and the Layer-2 ID "KKK" assigned to the intersection K. For example, in step S204, the Layer-2 ID "KKK" is registered as a communication partner in the storage unit 202.

In step S210, based on information acquired by the vehicle information acquisition unit 205, the control unit 201 determines whether an event of which a notification is to be given via relay by the roadside apparatus 10 occurs. If the determination of the control unit 201 is positive, the processing proceeds to step S214. If the determination is negative, the processing proceeds to step S220.

In step S214, the control unit 201 transmits a communication message (Fig. 7) related to the event that has occurred to a terminal as a relay target via the roadside apparatus 10 (the sidelink relay). In "Frame Payload" (Fig. 7) of this communication message, the occurrence of a particular event and information related to the event that has occurred are described.

In step S220, based on information acquired by the vehicle information acquisition unit 205, the control unit 201 determines whether this vehicle moves away from the intersection K. If the determination of the control unit 201 is positive, the processing proceeds to step S202. If the determination is negative, the processing proceeds to step S224.

In step S224, the control unit 201 determines, via the wireless communication unit 204, whether a sidelink communication message transmitted from another terminal (UE) is received. If the determination of the control unit 201 is positive, the processing proceeds to step S228. If the determination is negative, the processing proceeds to step S210. The sidelink communication message as the determination target in step S224 is not limited to a message via the roadside apparatus 10, and may be a sidelink communication message directly transmitted from another terminal (UE) to this vehicle.

In step S228, according to the sidelink communication message of which the reception is confirmed in step S224, the control unit 201 transmits a necessary sidelink communication message to the roadside apparatus 10. The destination of the sidelink communication message ("Destination Layer-2 ID" in Fig. 7) is the Layer-2 ID "KKK". Thus, if the roadside apparatus 10 receives the sidelink communication message, the determination in step S107 is positive. That is, the roadside apparatus 10 (the control unit 101) determines that the sidelink communication message is a relay request message.

As described above, according to the above exemplary embodiment, each of the terminals (the vehicles 20A, 20B, and 20C; UE) requests the relay of sidelink communication of which the destination is the particular Layer-2 ID "KKK" assigned to the intersection K, using a relay request message. Then, the roadside apparatus 10 can execute the relay based on the request for the relay. Thus, even if the presence or absence of the roadside apparatus 10 (the sidelink relay) capable of performing the relay is unknown, the terminal (UE) can make a relay request. Further, the terminal (UE) can know the Layer-2 ID of the relay apparatus from a response to the relay request message. Based on destination information included in the relay request message, the roadside apparatus 10 can also know the particular Layer-2 ID via which the relay is to be performed. This enables the roadside apparatus 10 to relay a sidelink message of which the destination is the Layer-2 ID "KKK".

Thus, the roadside apparatus 10 relays sidelink communication and thereby can expand the range where communication can be performed.

Next, the relay of a message of which the destination is a Layer-2 ID in unicast is also briefly described. In this case, a configuration may be employed in which the roadside apparatus 10 relays the exchange of a discovery in which a relay request is set. Then, using the execution of the relay as a trigger, the roadside apparatus 10 stores information indicating that the exchange of various pieces of information exchanged between apparatuses from this point onward is to be relayed. Finally, the roadside apparatus 10 relays the exchange of various pieces of information exchanged between the apparatuses. By the above processing, it is also possible to expand the range where communication can be performed through unicast communication.

### <Other Exemplary Embodiments>

The present disclosure can also be achieved by the process of supplying a program for achieving one or more functions of the above exemplary embodiments to a system or an apparatus via a network or a storage medium, and of causing one or more processors of a computer of the system or the apparatus to read and execute the program. The present disclosure can also be achieved by a circuit (e.g., an ASIC) for achieving the one or more functions.

For example, in the above exemplary embodiments, a wireless access method is New Radio (NR), which is a wireless access method of fifth generation (5G), but is not limited to this. That is, another access method such as Long-Term Evolution (LTE), sixth generation (6G) or later, or WiFi may be at least partially applied to the wireless access method.

Sidelink communication is not limited to a discovery message. For example, sidelink communication may be a message regarding direct communication or a message regarding vehicle-to-everything (V2X) communication.

The invention is not limited to the above exemplary embodiments, and can be changed and modified in various ways without departing from the spirit and the scope of the invention. Thus, the claims are appended to publicize the scope of the invention.

The present invention is not limited to the above exemplary embodiments, and can be changed and modified in various ways without departing from the spirit and the scope of the present invention. Thus, the following claims are appended to publicize the scope of the present invention.

The present application claims priority to Japanese Patent Application No. 2022-145755 filed on September 14, 2022, the entire contents of which are incorporated herein by reference.

### Description of the Reference Characters

- 10: roadside apparatus (sidelink relay)
- 20A, 20B, 20C: vehicle (terminal, user equipment (UE))
- 101: control unit
- 102: storage unit
- 103: communication processing unit
- 104: relay processing unit
- 105: wireless communication unit
- 106: wired communication unit
- 200: communication apparatus
- 201: control unit
- 202: storage unit
- 203: communication processing unit
- 204: wireless communication unit
- 205: vehicle information acquisition unit
- 206: operation unit
- 207: display unit

## Claims

1. A communication apparatus having a sidelink communication function, the communication apparatus comprising:
a transmission unit configured to transmit a message which does not include a Layer-2 identifier (ID) identifying a relay apparatus having a function of relaying sidelink communication, and of which a destination is a Layer-2 ID different from the Layer-2 ID of the relay apparatus, and which includes information indicating that the communication apparatus desires relay of the message before a payload.

2. The communication apparatus according to claim 1, wherein the message is a discovery message.

3. A communication apparatus having a sidelink communication function, the communication apparatus comprising:
a transmission unit configured to transmit a relay request message of which a destination is a relay Layer-2 ID to a relay apparatus having a function of relaying sidelink communication, thereby requesting the relay apparatus to relay sidelink communication of which a destination is the relay Layer-2 ID and which is directed to other user equipment having a sidelink communication function,
wherein the relay Layer-2 ID is shared by a plurality of communication apparatuses that performs communication via relay by the relay apparatus with each other.

4. The communication apparatus according to claim 3, wherein the relay request message is a discovery message which is transmitted from the transmission unit and of which a destination is the relay Layer-2 ID.

5. The communication apparatus according to claim 3,
wherein the relay request message is a communication message which is different from a discovery message and of which a destination is the relay Layer-2 ID, and
wherein the transmission unit transmits the communication message, thereby requesting the relay apparatus to perform the relay.

6. The communication apparatus according to any one of claims 3 to 5, wherein the relay Layer-2 ID is set according to an installation location of the relay apparatus or a use of communication via the relay apparatus.

7. The communication apparatus according to any one of claims 3 to 6, wherein the relay request message further includes information specifying a valid period of a relay operation performed by the relay apparatus.

8. The communication apparatus according to any one of claims 3 to 7, wherein in a case where the relay by the relay apparatus that accepts a relay request regarding the relay request message becomes unnecessary, the transmission unit transmits a message that requests the relay apparatus to end the relay.

9. A communication apparatus having a sidelink relay function for relaying sidelink communication, the communication apparatus comprising:
a communication unit configured to receive a relay request message of which a destination is a relay Layer-2 ID; and
a setting unit configured to, in a case where the communication unit receives the relay request message, set an operation to relay a message regarding sidelink communication from a transmission source of the relay request message of which the destination is the relay Layer-2 ID to other user equipment having a sidelink communication function.

10. The communication apparatus according to claim 9,
wherein in response to a discovery message as the relay request message, the communication unit returns a response message to the transmission source of the relay request message, and
wherein the response message includes the relay Layer-2 ID.

11. The communication apparatus according to claim 9 or 10, wherein the relay request message is a discovery message regarding sidelink communication and is a message including information that requests relay before a payload.

12. The communication apparatus according to any one of claims 9 to 11, wherein in a case where the relay request message includes information indicating a valid period of a relay operation, the communication unit ends the relay based on the information indicating the valid period.

13. The communication apparatus according to any one of claims 9 to 12, wherein in a case where the communication unit receives a message that requests an end of the relay from a sidelink communication apparatus that requests the relay, the communication unit stops a relay operation and transmits a relay end completion message to the sidelink communication apparatus that requests the relay.

14. The communication apparatus according to any one of claims 9 to 13, wherein the message regarding sidelink communication is another message different from the relay request message.

15. A communication system including a plurality of first communication apparatuses having a sidelink communication function, and a second communication apparatus having a sidelink relay function for relaying sidelink communication,
each of the first communication apparatuses comprising:
a first communication unit configured to transmit a relay request message of which a destination is a relay Layer-2 ID to a relay apparatus having a function of relaying sidelink communication, thereby requesting the relay apparatus to relay sidelink communication of which a destination is the relay Layer-2 ID,
the second communication apparatus comprising:
a second communication unit configured to receive the relay request message of which the destination is the relay Layer-2 ID; and
a setting unit configured to, in a case where the second communication unit receives the relay request message, set an operation to relay a message regarding the sidelink communication of which the destination is the relay Layer-2 ID to other user equipment having the sidelink communication function,
wherein the relay Layer-2 ID is shared by the plurality of first communication apparatus that performs communication via relay by the second communication apparatus.

16. The communication system according to claim 15, wherein the relay apparatus is placed in association with an intersection, and each of the first communication apparatuses and the second communication apparatus moves with a moving body passing through the intersection.

17. A control method for controlling a communication apparatus having a sidelink communication function, the control method comprising:
transmitting a message which does not include a Layer-2 identifier (ID) identifying a relay apparatus having a function of relaying sidelink communication, and of which a destination is a Layer-2 ID different from the Layer-2 ID of the relay apparatus, and which includes information indicating that the communication apparatus desires relay of the message before a payload.

18. A program for causing a computer to execute the control method for controlling a communication apparatus according to claim 17.
